# EUROPÄISCHE PATENTSCHRIFT

(11) **EP 1 491 382 B1**
(45) Veröffentlichungstag und Bekanntmachung des Hinweises auf die Patenterteilung: **12.07.2006**
(21) Anmeldenummer: 04102352.4
(22) Anmeldetag: 27.05.2004
(51) Int. Cl.: B60K 15/063, F02M 25/00

(54) **Einrichtung zur Speicherung von Kraftstoff**
System for storing fuel
Système pour emmagasiner combustible

(30) Priorität: 23.06.2003 DE 10328268
(43) Veröffentlichungstag der Anmeldung: 29.12.2004
(73) Patentinhaber: SIEMENS AKTIENGESELLSCHAFT, 80333 München (DE)
(72) Erfinder: Bausewein, Markus, 54625 Bensheim (DE); Dasbach, Burkhard, 60389 Frankfurt (DE)

(56) Entgegenhaltungen:
- EP-A- 1 158 148
- DE-A1- 10 112 361
- DE-A1- 10 132 187
- DE-A1- 10 259 805
- DE-A1- 19 727 923
- US-A- 4 370 998

## Beschreibung

Die Erfindung betrifft eine Einrichtung zur Speicherung von Kraftstoff und einer weiteren, mit dem Kraftstoff in einem vorgesehenen Verhältnis zu mischenden Flüssigkeit mit einem Kraftstoffbehälter und mit einem zur Befüllung mit der Flüssigkeit vorgesehenen Zusatzbehälter.

Solche Einrichtungen werden insbesondere bei Kraftfahrzeugen mit Diesel-Brennkraftmaschine zur Beimischung eines Additivs zu dem Kraftstoff benötigt. Der Zusatzbehälter hat hierfür Öffnungen zum Nachfüllen des Additivs, zur Verbindung mit dem Kraftstoffbehälter und zur Entlüftung. Zur Vermeidung eines Entweichens dampfförmigen Additivs in die Umwelt sind die Öffnungen zuverlässig abzudichten oder mit einem Aktivkohlefilter zu verbinden.

Die DE 10112361 A offenbart eine gattungsbildende Einrichtung.

Der Erfindung liegt das Problem zugrunde, eine Einrichtung der eingangs genannten Art so zu gestalten, dass sie ein Entweichen von Dämpfen der in dem Zusatzbehälter befindlichen Flüssigkeit in die Umwelt zuverlässig vermeidet und möglichst einfach aufgebaut ist.

Dieses Problem wird erfindungsgemäß durch die Merkmale des Anspruchs 1 gelöst.

Durch diese Gestaltung wird ein direktes Entweichen von Dämpfen der in dem Zusatzbehälter befindlichen Flüssigkeit durch Undichtigkeiten im Bereich der Anschlüsse des Zusatzbehälters in die Umgebung zuverlässig vermieden. Aufwändige Abdichtungen der Anschlüsse des Zusatzbehälters lassen sich hierdurch einfach vermeiden. Die erfindungsgemäße Einrichtung ist daher besonders einfach aufgebaut. Weiterhin können durch die zur Entlüftung des Zusatzbehälters entweichenden Gase einfach über einen meist ohnehin vorhandenen Aktivkohlefilter des Kraftstoffbehälters geleitet werden. Ein weiterer Vorteil der Erfindung besteht darin, dass der Kraftstoffbehälter und der Zusatzbehälter nach einer Vormontage gemeinsam montiert werden können. Dies führt zu besonders geringen Kosten bei der Montage der erfindungsgemäßen Einrichtung.

Aus dem Kraftstoffbehälter und dem Zusatzbehälter entweichende Gase lassen sich gemäß der Erfindung mit einem gemeinsamen Aktivkohlefilter verbinden, wenn der Kraftstoffbehälter und der Zusatzbehälter einen gemeinsamen Flansch aufweisen und wenn Ent- und Belüftungsleitungen des Kraftstoffbehälters und des Zusatzbehälters zu dem Flansch geführt sind.

Zur weiteren Vereinfachung des Aufbaus der erfindungsgemäßen Einrichtung trägt es bei, wenn der Zusatzbehälter im Wesentlichen innerhalb des Kraftstoffbehälters angeordnet ist.

Die Anzahl der Öffnungen in dem Kraftstoffbehälter lässt sich gemäß einer anderen vorteilhaften Weiterbildung der Erfindung besonders gering halten, wenn eine Befüllleitung des Zusatzbehälters zu dem Flansch geführt ist.

Zur Vereinfachung der Montage des Zusatzbehälters in dem Kraftstoffbehälter trägt es gemäß einer anderen vorteilhaften Weiterbildung der Erfindung bei, wenn der Zusatzbehälter mittels einer Rastverbindung an der inneren Wandung des Kraftstoffbehälters gehalten ist.

Zur weiteren Vereinfachung der Montage des Zusatzbehälters in dem Kraftstoffbehälter trägt es gemäß einer anderen vorteilhaften Weiterbildung der Erfindung bei, wenn eine zur Führung von in dem Zusatzbehälter befindlicher Flüssigkeit in den Kraftstoffbehälter vorgesehene Dosierpumpe mit dem Zusatzbehälter eine bauliche Einheit bildet.

Eine Vermischung der von der Dosierpumpe aus dem Zusatzbehälter geförderten Flüssigkeit mit dem im Kraftstoffbehälter befindlichen Kraftstoff gestaltet sich besonders einfach, wenn in Strömungsrichtung der Flüssigkeit gesehen hinter der Dosierpumpe eine mit Kraftstoff als Treibmittel zu versorgende Saugstrahlpumpe angeordnet ist.

Der Aufwand für die Versorgung der Saugstrahlpumpe mit Treibmittel lässt sich gemäß einer anderen vorteilhaften Weiterbildung der Erfindung besonders gering halten, wenn die Saugstrahlpumpe mit einer in dem Kraftstoffbehälter angeordneten Fördereinheit für Kraftstoff verbunden ist. Hierbei kann die Saugstrahlpumpe unabhängig von dem Betrieb der Dosierpumpe angetrieben werden. Eine separate Ansteuerung der Saugstrahlpumpe ist daher nicht erforderlich.

Das vorgesehene Mischungsverhältnis zwischen dem Kraftstoff und der im Zusatzbehälter befindlichen Flüssigkeit lässt sich gemäß einer anderen vorteilhaften Weiterbildung der Erfindung einfach durch eine Steuereinheit zur Erfassung einer in den Kraftstoffbehälter nachgefüllten Menge an Kraftstoff und zur Ansteuerung der Dosierpumpe für eine der erfassten Menge an Kraftstoff entsprechenden Zeitspanne einstellen.

Die in den Kraftstoffbehälter nachgefüllte Menge lässt sich gemäß einer anderen vorteilhaften Weiterbildung der Erfindung einfach erfassen, wenn die Steuereinheit mit einem in dem Kraftstoffbehälter angeordneten Füllstandssensor verbunden ist.

Bei einem Einsatz der erfindungsgemäßen Einrichtung in einem Kraftfahrzeug wird der Fahrer des Kraftfahrzeuges an eine Entleerung des Zusatzbehälters erinnert, wenn in dem Zusatzbehälter ein zur Ansteuerung einer Warneinrichtung vorgesehener Füllstandssensor angeordnet ist.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Figur 1: schematisch eine erfindungsgemäße Einrichtung,
- Figur 2: eine Schnittdarstellung durch einen Zusatzbehälter der erfindungsgemäßen Einrichtung aus Figur 1.

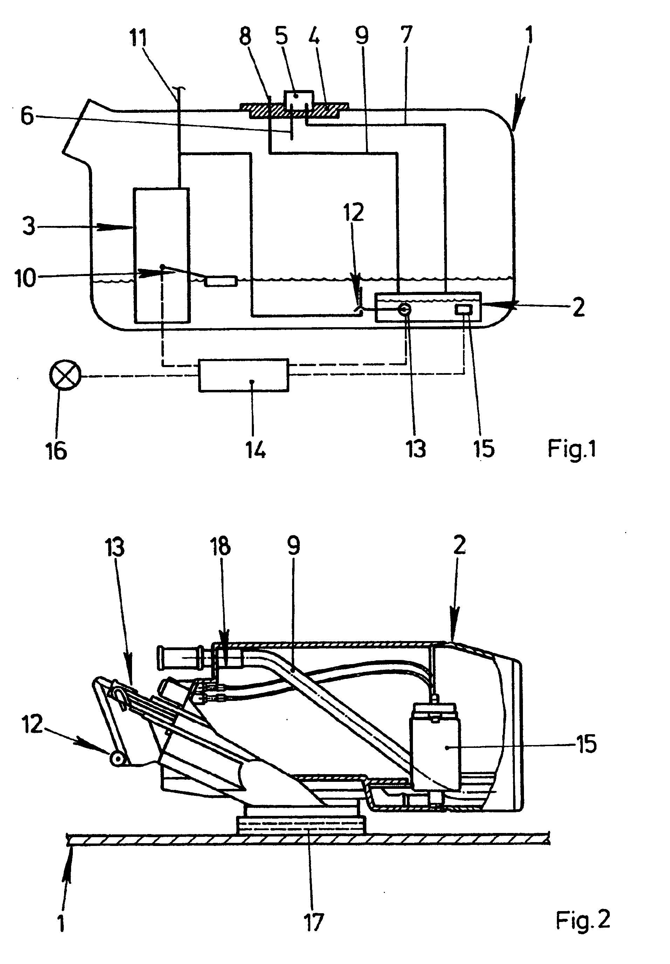

Figur 1 zeigt einen Kraftstoffbehälter 1 für ein Kraftfahrzeug mit einem darin angeordneten Zusatzbehälter 2 und einer Fördereinheit 3 zur Förderung von Kraftstoff aus dem Kraftstoffbehälter 1 zu einer nicht dargestellten Brennkraftmaschine des Kraftfahrzeuges. Der Zusatzbehälter 2 dient beispielsweise zur Aufnahme eines dem Kraftstoff in einem vorgesehenen Verhältnis beizumischenden Additivs. Ein solches Additiv vermag die Verbrennungstemperatur von bei der Verbrennung von Diesel-Kraftstoff entstehenden Partikeln zu senken und damit den Einsatz eines durch Abbrand der Partikel zu reinigenden Partikelfilters zu ermöglichen.

Der Kraftstoffbehälter 1 hat in seinem oberen Bereich einen Flansch 4 mit einem Aktivkohlefilter 5. Zu dem Aktivkohlefilter 5 sind Entlüftungsleitungen 6, 7 des Kraftstoffbehälters 1 und des Zusatzbehälters 2 geführt. Weiterhin hat der Flansch 4 einen Anschluss 8 für eine zu dem Zusatzbehälter 2 führende Befüllleitung 9. Die Fördereinheit 3 trägt einen als Hebelgeber ausgebildeten Füllstandssensor 10 zur Erfassung des in dem Kraftstoffbehälter 1 befindlichen Kraftstoffs. Der Kraftstoff wird zu einer zu der Brennkraftmaschine geführten Vorlaufleitung 11 gefördert. An der Vorlaufleitung 11 ist eine unmittelbar vor dem Zusatzbehälter 2 angeordnete Saugstrahlpumpe 12 angeschlossen. Der Zusatzbehälter 2 hat eine Dosierpumpe 13 zur Förderung der Flüssigkeit in den Saugbereich der Saugstrahlpumpe 12. Mittels der Saugstrahlpumpe 12 wird die von der Dosierpumpe 13 geförderte Flüssigkeit mit Kraftstoff vermischt und im Kraftstoffbehälter 1 verteilt.

Der Füllstandssensor 10 und die Dosierpumpe 13 sind mit einer elektronischen Steuereinheit 14 verbunden. Beim Nachfüllen von Kraftstoff in den Kraftstoffbehälter 1 wird die nachgetankte Menge des Kraftstoffs berechnet und die entsprechende Menge an Flüssigkeit mittels der Dosierpumpe 13 zugeführt. Die Dosierpumpe 13 fördert im Betrieb einen im Mittel konstanten Volumenstrom. Die Menge der dem Kraftstoff zugeführten Flüssigkeit lässt sich damit über die Dauer des Betriebs der Dosierpumpe 13 einstellen. Die Steuereinheit 14 ist mit einem im Zusatzbehälter 2 angeordneten Füllstandssensor 15 und mit einer Warneinrichtung 16 verbunden.

Figur 2 zeigt den Zusatzbehälter 2 aus Figur 1 und den Bodenbereich des Kraftstoffbehälters 1 in einer Schnittdarstellung. Der Zusatzbehälter 2 ist mittels einer Rastverbindung 17 an dem Boden des Kraftstoffbehälters 1 gehalten. Die Befüllleitung 9 ist bis in den Bodenbereich nahe des Füllstandssensors 15 geführt. Die Dosierpumpe 13 und die Saugstrahlpumpe 12 bilden eine bauliche Einheit. Die Förderrichtung der Saugstrahlpumpe 12 verläuft senkrecht zur Zeichenebene. Eine Öffnung 18 für die in Figur 1 dargestellte Entlüftungsleitung 7 ist im oberen Bereich des Zusatzbehälters 2 nahe der Befüllleitung 9 angeordnet.

## Patentansprüche

1. Einrichtung zur Speicherung von Kraftstoff und einer weiteren, mit dem Kraftstoff in einem vorgesehenen Verhältnis zu mischenden Flüssigkeit mit einem Kraftstoffbehälter (1) und mit einem zur Befüllung mit der Flüssigkeit vorgesehenen Zusatzbehälter (2), wobei Anschlüsse des Zusatzbehälters (2) innerhalb des Kraftstoffbehälters (1) angeordnet sind, wobei der Zusatzbehälter (2) und der Kraftstoffbehälter (1) als vormontierbare bauliche Einheit gestaltet sind, **dadurch gekennzeichnet, dass** der Kraftstoffbehälter (1) und der Zusatzbehälter (2) einen gemeinsamen Flansch (4) aufweisen und dass Entlüftungsleitungen (6, 7) des Kraftstoffbehälters (1) und des Zusatzbehälters (2) zu dem Flansch (4) geführt sind.

2. Einrichtung nach Anspruch 1, **dadurch gekennzeichnet, dass** der Zusatzbehälter (2) im Wesentlichen innerhalb des Kraftstoffbehälters (1) angeordnet ist.

3. Einrichtung nach Anspruch 1 oder 2, **dadurch gekennzeichnet, dass** eine Befüllleitung (9) des Zusatzbehälters (2) zu dem Flansch (4) geführt ist.

4. Einrichtung nach zumindest einem der vorhergehenden Ansprüche, **dadurch gekennzeichnet, dass** der Zusatzbehälter (2) mittels einer Rastverbindung (17) an der inneren Wandung des Kraftstoffbehälters (1) gehalten ist.

5. Einrichtung nach zumindest einem der vorhergehenden Ansprüche, **dadurch gekennzeichnet, dass** eine zur Führung von in dem Zusatzbehälter (2) befindlicher Flüssigkeit in den Kraftstoffbehälter (1) vorgesehene Dosierpumpe (13) mit dem Zusatzbehälter (2) eine bauliche Einheit bildet.

6. Einrichtung nach zumindest einem der vorhergehenden Ansprüche, **dadurch gekennzeichnet, dass** in Strömungsrichtung der Flüssigkeit gesehen hinter der Dosierpumpe (13) eine mit Kraftstoff als Treibmittel zu versorgende Saugstrahlpumpe (12) angeordnet ist.

7. Einrichtung nach zumindest einem der vorhergehenden Ansprüche, **dadurch gekennzeichnet, dass** die Saugstrahlpumpe (12) mit einer in dem Kraftstoffbehälter (1) angeordneten Fördereinheit (3) für Kraftstoff verbunden ist.

8. Einrichtung nach zumindest einem der vorhergehenden Ansprüche, **gekennzeichnet durch** eine Steuereinheit (14) zur Erfassung einer in den Kraftstoffbehälter (1) nachgefüllten Menge an Kraftstoff und Ansteuerung der Dosierpumpe (13) für eine der erfassten Menge an Kraftstoff vorgesehenen Zeitspanne.

9. Einrichtung nach zumindest einem der vorhergehenden Ansprüche, **dadurch gekennzeichnet, dass** die Steuereinheit (14) mit einem in dem Kraftstoffbehälter (1) angeordneten Füllstandssensor (10) verbunden ist.

10. Einrichtung nach zumindest einem der vorhergehenden Ansprüche, **dadurch gekennzeichnet, dass** in dem Zusatzbehälter (2) ein zur Ansteuerung einer Warneinrichtung (16) vorgesehener Füllstandssensor (15) angeordnet ist.

## Claims

1. Arrangement for the storage of fuel and of a further liquid to be mixed with the fuel in an intended ratio, having a fuel tank (1) and an additional tank (2) to be filled with the liquid, connections of the additional tank (2) being arranged inside the fuel tank (1), the additional tank (2) and the fuel tank (1) being designed as a pre-assembled structural unit, **characterized in that** the fuel tank (1) and the additional tank (2) have a common flange (4) and that venting lines (6, 7) of the fuel tank (1) and the additional tank (2) are led to the flange (4).

2. Arrangement according to Claim 1, **characterized in that** the additional tank (2) is arranged substantially inside the fuel tank (1).

3. Arrangement according to Claim 1 or 2, **characterized in that** a filling line (9) of the additional tank (2) is led to the flange (4).

4. Arrangement according to at least one of the preceding claims, **characterized in that** the additional tank (2) is held against the inner wall of the fuel tank (1) by means of a snap connection (17).

5. Arrangement according to at least one of the preceding claims, **characterized in that** a proportioning pump (13), intended for delivering liquid present in the additional tank (2) into the fuel tank (1), forms one structural unit with the additional tank (2).

6. Arrangement according to at least one of the preceding claims, **characterized in that** a suction jet pump (12), to be supplied with fuel as working fluid, is arranged downstream of the proportioning pump (13), viewed in the direction of flow of the liquid.

7. Arrangement according to at least one of the preceding claims, **characterized in that** the suction jet pump (12) is connected to a fuel feed unit (3) arranged in the fuel tank (1).

8. Arrangement according to at least one of the preceding claims, **characterized by** a control unit (14) for registering a replenishment quantity of fuel delivered to the fuel tank (1) and for actuating the proportioning pump (13) for a period of time corresponding to the fuel quantity registered.

9. Arrangement according to at least one of the preceding claims, **characterized in that** the control unit (14) is connected to a filling level sensor (10) arranged in the fuel tank (1).

10. Arrangement according to at least one of the preceding claims, **characterized in that** a filling level sensor (15) intended to activate a warning device (16) is arranged inside the additional tank (2).

## Revendications

1. Système destiné à emmagasiner du carburant et un autre liquide à mélanger au carburant dans un rapport donné, comportant un réservoir à carburant (1) et un réservoir complémentaire (2) prévu pour être rempli de liquide à mélanger, où des raccordements du réservoir complémentaire (2) sont disposés à l'intérieur du réservoir à carburant (1), où le réservoir complémentaire (2) et le réservoir à carburant (1) sont conçus sous la forme d'une unité constructive préassemblée, **caractérisé en ce que** le réservoir à carburant (1) et le réservoir complémentaire (2) ont une bride commune (4) et que des conduites de dégazage (6, 7) du réservoir à carburant (1) et du réservoir complémentaire (2) conduisent à la bride (4).

2. Système selon la revendication 1 **caractérisé en ce que** le réservoir complémentaire (2) est disposé, pour l'essentiel, à l'intérieur du réservoir à carburant (1).

3. Système selon la revendication 1 ou 2 **caractérisé en ce que** une conduite de remplissage (9) du réservoir complémentaire (2) conduit à la bride (4).

4. Système selon au moins l'une des revendications précédentes **caractérisé en ce que** le réservoir complémentaire (2) est maintenu sur la paroi intérieure du réservoir à carburant (1) par une liaison de retenue (17).

5. Système selon au moins l'une des revendications précédentes **caractérisé en ce que** une pompe de dosage (13), prévue pour le convoyage du liquide se trouvant dans le réservoir complémentaire (2) vers le réservoir à carburant (1), constitue une unité constructive avec le réservoir complémentaire (2).

6. Système selon au moins l'une des revendications précédentes **caractérisé en ce que** une pompe à jet aspirant (12), à alimenter en carburant en tant que fluide moteur, est montée, vu dans le sens d'écoulement du liquide, derrière la pompe de dosage (13).

7. Système selon au moins l'une des revendications précédentes **caractérisé en ce que** la pompe à jet aspirant (12) est reliée à une unité de transport (3) de carburant disposée dans le réservoir à carburant (1).

8. Système selon au moins l'une des revendications précédentes **caractérisée par** une unité de commande (14) destinée à détecter une quantité de carburant rajoutée dans le réservoir à carburant (1) et à faire tourner la pompe de dosage (13) pendant un laps de temps prévu pour la quantité de carburant détectée.

9. Système selon au moins l'une des revendications précédentes **caractérisé en ce que** l'unité de commande (14) est reliée à un capteur (10) de niveau de remplissage monté dans le réservoir à carburant (1).

10. Système selon au moins l'une des revendications précédentes **caractérisé en ce que** un capteur (15) de niveau de remplissage, prévu pour la commande d'un système de mise en garde (16), est monté dans le réservoir complémentaire (2).
